Europäisches Patentamt

European Patent Office

Office européen des brevets

(11) Publication number: **0 353 148**
A2

# EUROPEAN PATENT APPLICATION

(21) Application number: **89402115.3**

(22) Date of filing: **25.07.89**

(51) Int. Cl.⁵: **B 01 D 69/08**
B 01 D 71/26, B 01 D 69/02,
B 01 D 67/00, A 61 M 1/18

(30) Priority: **25.07.88 JP 185286/88**

(43) Date of publication of application:
**31.01.90 Bulletin 90/05**

(84) Designated Contracting States:
**BE DE FR GB IT NL SE**

(71) Applicant: **Terumo Kabushiki Kaisha
No. 44-1, Hatagaya 2-chome Shibuya-ku
Tokyo 151 (JP)**

(72) Inventor: **Yamazaki, Manabu c/o Terumo Kabushiki
Kaisha
2656-1, Ohbuchi Fuji-shi
Shizuoka-ken (JP)**

**Tatebe, Ken
15-11, Sakae-cho 1-chome Atsugi-shi
Kanagawa-ken (JP)**

(74) Representative: **Gillard, Marie-Louise et al
Cabinet Beau de Loménie 55, Rue d'Amsterdam
F-75008 Paris (FR)**

(54) Porous hollow fiber membrane of polypropylene and method for production thereof.

(57) A porous hollow fiber membrane of polypropylene possessing a substantially circular cross section 150 to 300 μm in inside diameter and 10 to 150 μm in wall thickness, which hollow fiber membrane exhibits a crystallinity in the range of 85 to 94%, a double refractive index ($\Delta$n) in the range of 0.001 to 0.01, an inner surface porosity in the range of 10 to 30%, a void ratio in the range of 10 to 60%, a specific surface area in the range of 10 to 40 m²/g, an oxygen gas flux in the range of 100 to 1,500 liters/min.m².kg/cm², and an ultimate amount of oxygen permeated in the range of 200 to 2,600 liters/min.m², and oxygenator using the membrane.

EP 0 353 148 A2

## Description

## POROUS HOLLOW FIBER MEMBRANE OF POLYPROPYLENE AND METHOD FOR PRODUCTION THEREOF

## BACKGROUND OF THE INVENTION

Field of the Invention:

This invention relates to a porous hollow fiber membrane of polypropylene and a method for the production thereof. More particularly, it relates to a porous hollow fiber membrane of polypropylene useful advantageously such as for a gas-exchange device in the oxygenator, a body fluid treating device, and a waste water treating device and a method for the production thereof. This invention further relates to the use of this porous hollow fiber membrane of polypropylene in the oxygenator and an oxygenator using this porous hollow fiber membrane of polypropylene.

Description of the Prior Art:

Generally in the surgical operation of the heart, the oxygenator of hollow fiber membrane is used as inserted in the extracorporeal circulatory circuit for the purpose of leading the patient's blood out of his body and adding oxygen to the blood and, at the same time, removing carbon dioxide gas from the blood. The hollow fiber membrane used in the oxygenator comes in two types, i.e. homogeneous membrane and porous membrane. The homogeneous membrane allows a gas to pass therein by enabling the molecules of the gas to dissolve and diffuse in the membrane. A typical homogeneous membrane made of silicone rubber has been commercially produced by Senko Ikogyo and marketed under trademark designation of "Mella-Silox." On account of the perviousness to gas, the homogeneous membrane made of silicone rubber is the only product currently found acceptable for actual use. On account of the strength, the silicone rubber membrane is not allowed to be produced in a thickness below 100 μm. The perviousness of this membrane to gas has its limit. The membrane exhibits poor perviousness particularly to carbon dioxide gas. Moreover, the silicone rubber itself has the disadvantage that it is expensive and deficient in formability.

In the porous membrane, since the minute pores possessed by the membrane are conspicuously large as compared with the molecules of a gas expected to permeate the membrane, the gas passes the membrane in the form of volume flow. Various oxygenators using such porous membranes as a microporous polypropylene membrane, for example, have been proposed. It has been proposed to produce a porous polypropylene hollow fiber by melting and extruding polypropylene through a hollow fiber producing nozzle at a spinning temperature in the range of 210° to 270°C at a draft ratio in the range of 180 to 600, subjecting the extruded hollow fiber to a first-step heat-treatment at a temperature of not higher than 155°C, stretching it at a ratio in the range of 30 to 200% at a temperature of lower than 110°C, and subjecting it to a second-step heat-treatment at a temperature exceeding the temperature of the first-step heat-treatment and not exceeding 155°C (Japanese Patent Publication SHO 56(1981)-52,123). Since the porous hollow fiber produced as described above forms minute pores therein physically by stretching the polypropylene hollow fiber, however, the minute pores are linear pores substantially perpendicular to the direction of width of the membrane. Since they are minute pores which are formed by the generation of cracks in the axial direction of the hollow fiber proportionately to the degree of stretching, they have a cross-section of the shape of a slit. These minute pores penetrate substantially straight through the membrane wall and account for a high void ratio for the membrane. The porous hollow fiber, therefore, has the disadvantage that it exhibits high perviousness to steam and, after protracted use for extracorporeal circulation of blood, suffers from leakage of blood plasma.

As a porous membrane incapable of entailing any leakage of blood plasma, for example, there has been proposed a porous hollow fiber membrane of polyolefin which is produced by mixing a polyolefin, an organic filler capable of being uniformly dispersed in the polyolefin while the polyolefin is in the molten state and readily soluble in a liquid extractant to be used, and a crystal seed-forming agent, melting the resultant mixture and discharging the molten mixture through an annular spinning nozzle and, at the same time, introducing an inert gas into the extruded hollow fiber of the mixture, cooling and solidifying the hollow fiber through exposure to a cooling and solidifying liquid incapable of dissolving the polyolefin, and subsequently exposing the cooled and solidified hollow fiber to the aforementioned liquid extractant incapable of dissolving the polyolefin thereby tracting the organic filler from the hollow fiber (Japanese Patent Laid-Open SHO 61(1986)-90,705). The hollow fiber membrane which is one species of hollow fiber membrane and which is obtained by using, as the cooling and solidifying liquid popularly adopted for its desirable behavior, a cooling and solidifying agent capable of dissolving the organic filler does not entail leakage of blood plasma because the pores are small and are complicate in contour as channels. Since this membrane has a small pore density per unit surface area, however, there is the possibility that the membrane fused in the oxygenator will offer an insufficient capacity for exchange of gas. Further, in the production of this membrane, there is the possibility that the low molecular component of the polyolefin will mingle into the cooling and solidifying agent capable of dissolving the organic filler, adhere to the inner wall of the cooling tube, and induce a change in the shape of the hollow fiber with elapse of time.

To eliminate this imperfection of the prior art, the inventors have already proposed a method for the production of a hollow fiber membrane characterized by the steps of mixing polypropylene, an organic filler capable of being uniformly dispersed in the propylene while the polypropylene is in the molten state and readily soluble in the liquid extractant to be used, and a crystal seed-forming agent, melting the resultant mixture and discharging the molten mixture in a hollow form through an annular spinning nozzle, cooling and solidifying the hollow fiber of the mixture by exposure to a liquid of the organic filler mentioned above or a compound similar thereto, and subsequently exposing the cooled and solidified hollow fiber to the liquid extractant incapable of dissolving polypropylene thereby extracting the organic filler therefrom (Japanese Patent Laid-Open SHO 62(1987)-106,770). We have further improved this method for the production of the hollow fiber membrane by conceiving an idea of using as the cooling and solidifying agent a solution lacking compatibility with the organic filler and possessing a capacity for specific heat in the range of 0.3 to 0.7 cal/g, to obtain the hollow fiber membrane with a highly satisfacrtory surface behavior (Japanese Patent Application SHO 62(1987)-329,846).

When the spinning is carried out by this method, the hollow fiber membrane can be extruded stably in spite of the impact of aging and the produced membrane enjoys stability of quality. It has been ascertained to the inventors, however, that for the pores formed in the hollow fiber membrane to extend through the thickness of the membrane as well as through the axial direction of the membrane in the pattern of a three-dimensional network so to speak, a set of fixed spinning conditions are required.

An object of this invention, therefore, is to provide an improved porous hollow fiber membrane of polypropylene, a method for the production thereof, and an oxygenator using the hollow fiber membrane.

Another object of this invention is to provide a porous hollow fiber membrane of polypropylene possessing a high gas-exchange capacity and a high filtration capacity in spite of a low void ratio, a method for the production thereof, and an oxygenator using the hollow fiber membrane.

## SUMMARY OF THE INVENTION

The objects are accomplished by a porous hollow fiber membrane of polypropylene possessing a substantially circular cross section 150 to 300 $\mu$m in inside diameter and 10 to 150 $\mu$m in wall thickness, which hollow fiber membrane exhibits a crystallinity in the range of 85 to 94%, a double refractive index ($\Delta$n) in the range of 0.001 to 0.01, an inner surface porosity in the range of 10 to 30%, a void ratio in the range of 10 to 60%, a specific surface area in the range of 10 to 40 $m^2$/g, an oxygen gas flux in the range of 100 to 1,500 liters/min.$m^2$.kg/$cm^2$, and an ultimate amount of oxygen permeated in the range of 200 to 1,600 liters/min.$m^2$.

This invention further discloses a porous hollow fiber membrane of polypropylene such that the solid phase in the inner surface of the hollow fiber membrane comprises polypropylene particles closely coalesced as partly exposed to form a continuous phase, the solid phase in the interior and the outer surface of the hollow fiber membrane comprises polypropylene particles arranged side by side in the axial direction of fiber to form a multiplicity of polypropylene clusters, the gaps between the separate segments of the solid phases constitute themselves holes continuing in the pattern of a three-dimensional network, the polypropylene particles of the solid phase possess an average particle diameter in the range of 0.1 to 1.0 $\mu$m, the voids in the inner surface of the hollow fiber membrane possess an average diameter in the range of 0.1 to 1.0 $\mu$m, and the maximum value of the pore diameter distribution curve for the whole membrane is in the range of 0.02 to 0.2 $\mu$m. This invention also discloses a porous hollow fiber membrane of polypropylene such that the ratio of the oxygen flux to said inner surface porosity is in the range of 7 : 1 to 30 : 1. This invention further discloses a porous hollow fiber membrane of polypropylene such that the ratio of the oxygen flux to said inner surface porosity is in the ragne of 2 : 1 to 13 : 1. This invention further discloses a porous hollow fiber membrane of polypropylene such that the quotient of the oxygen flux divided by the porosity and the void ratio is not more than 0.7.

The objects described above are accomplished further by a method for the production of a porous hollow fiber membrane of polypropylene by the steps of mixing polypropylene, an organic filler uniformly dispersible in polypropylene while the polypropylene is in a molten state and easily soluble in a liquid extractant to be used subsequently, and a crystal seed-forming agent, melting the resultant mixture and discharging the molten mixture in a hollow form through an annular spinning hole, cooling and solidifying the hollow fiber consequently obtained by exposure to a cooling and solidifying liquid, and subsequently causing the cooled and solidified hollow fiber to contact the liquid extractant incapable of dissolving polypropylene thereby extracting the organic filler from the hollow fiber, which method is characterized by the fact that the draft ratio of spinning is in the range of 100 to 300.

This invention further discloses a method for the production of a hollow fiber membrane, wherein the organic filler is liquid paraffin. This invention also discloses a method for the production of a hollow fiber membrane, wherein the amount of the organic filler to be incorporated is in the range of 50 to 170 parts by weight, based on 100 parts by weight of polypropylene. This invention further discloses a method for the production of a hollow fiber membrane, wherein the crystal seed-forming agent is a dibenzylidene sorbitol type crystal seed-forming agent possessing a melting point of not lower than 150°C and a gelling point of not lower than the crystallization starting temperature of polypropylene to be used. This invention further discloses a method for the production of a hollow fiber membrane, wherein the amount of the crystal seed-forming agent to be incorporated is in the range of 0.1 to 5 parts by weight, based on 100 parts by weight of polypropylene. This invention also discloses a method for the production of a hollow fiber membrane of polypropylene, wherein the cooling and solidifying liquid possessing a specific heat capacity in the range of 0.20 to 0.80 cal/g and a dynamic viscosity at 40°C in the range of 6.0 to 60 cSt and lacking compatibility both with polypropylene and with the organic filler.

The aforementioned objects are also accomplished by an oxygenator provided with a hollow fiber membrane as a gas-exchange membrane, which oxygenator is characterized by the fact that the gas-exchange membrane is a porous hollow fiber membrane of polypropylene possesses a substantially circular cross section 150 to 300 μm in inside diameter and 10 to 150 μm in wall thickness and the hollow fiber membrane exhibits a crystallinity in the range of 85 to 94%, a double refractive index ($\Delta$n) in the range of 0.001 to 0.01, an inner surface porosity in the range of 10 to 30%, a void ratio in the range of 10 to 60%, a specific surface area in the range of 10 to 40 m$^2$/g, an oxygen gass flux in the range of 100 to 1,500 liters/min.m$^2$.kg/cm$^2$, and an ultimate amount of oxygen permeated in the range of 200 to 2,600 liters/min.m$^2$.

This invention further discloses an oxygenator, wherein the porous hollow fiber membrane of polypropylene used as the gas-exchange membrane is such that the solid phase in the inner surface of the hollow fiber membrane comprises polypropylene particles closely coalesced as partly exposed to form a continuous phase, the solid phase in the interior and the outer surface of the hollow fiber membrane comprises polypropylene particles arranged side by side in the axial direction of fiber to form a multiplicity of polypropylene clusters, the gaps between the separate segments of the solid phases constitute themselves holes continuing in the pattern of a three-dimensional network, the polypropylene particles of the solid phase possess an average particle diameter in the range of 0.1 to 1.0 μm, the voids in the inner surface of the hollow fiber membrane possess an average diameter in the range of 0.1 to 1.0 μm, and the maximum value of the pore diameter distribution curve for the whole membrane is in the range of 0.02 to 0.2 μm. This invention also discloses an oxygenator, wherein the ratio of the oxygen flux to the inner surface porosity in the porous hollow fiber membrane of polypropylene used as the gas-exchange membrane is in the range of 7 : 1 to 30 : 1. This invention further discloses an oxygenator, wherein the ratio of the oxygen flux to the inner surface porosity in the porous hollow fiber membrane of polypropylene used as the gas-exchange membrane is in the range of 2 : 1 to 13 : 1. This invention also discloses an oxygenator, wherein the porous hollow fiber membrane of polypropylene used as the gas-exchange membrane is such that the quotient of the oxygen flux divided by the porosity and the void ratio is not more than 0.7.


BRIEF DESCRIPTION OF THE DRAWINGS


Fig. 1 is a cross section illustrating schematically a fine structure of a hollow fiber membrane according with the present invention,

Fig. 2 is a schematic cross section of an apparatus to be used in the method for the production of a hollow fiber membrane according with the present invention,

Fig. 3 is a half-sectioned diagram illustrating a typical oxygenator as one embodiment of this invention, and

Fig. 4 is a cross section illustrating several portions of the oxygenator concerning the packing ratio of hollow fiber membrane in the embodiment.


EXPLANATION OF THE PREFERRED EMBODIMENT


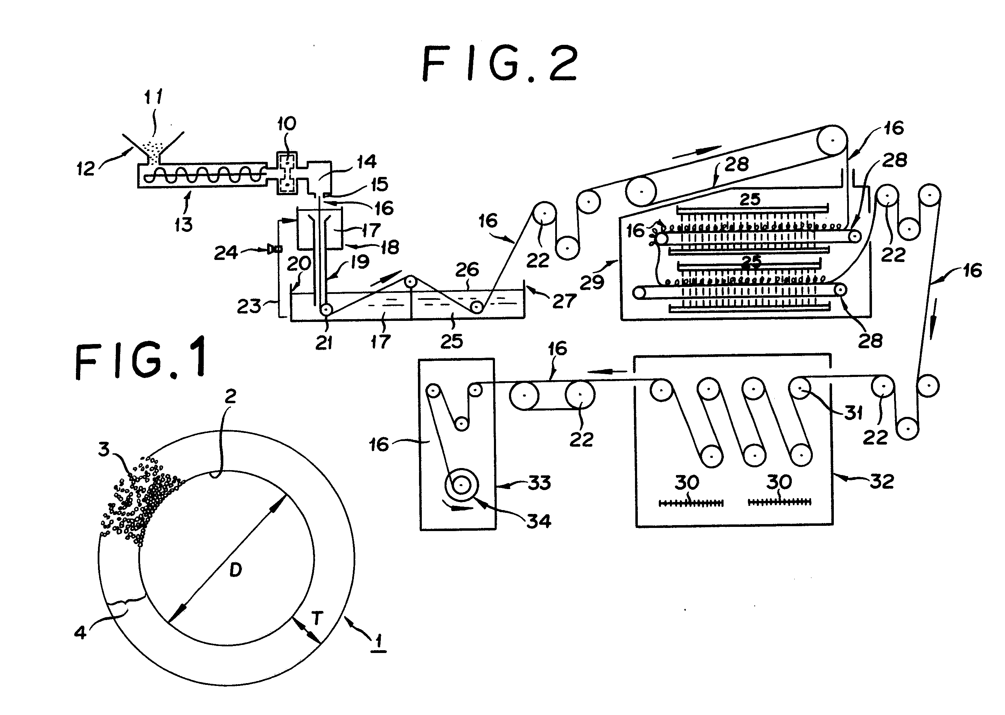

Now, this invention will be described more specifically below with reference to the drawings. Fig. 1 is a diagram depicting as a model the cross section of a hollow fiber membrane according with the present invention. As clearly noted from the diagram, it is a porous hollow fiber membrane 1 of polypropylene possessing a substantially circular cross section having an inside diameter D in the range of 150 to 300 μm, preferably 180 to 250 μm, and a wall thickness T in the range of 10 to 150 μm, preferably 20 to 100 μm, and more preferably 40 to 60 μm. This porous hollow fiber membrane of polypropylene has the crystallinity of polypropylene controlled in the range of 85 to 94%, preferably 90 to 94%, and the double refractive index ($\Delta$n) in the range of 0.001 to 0.01, preferably 0.002 to 0.005, by keeping the spinning draft in the range of 100 to 300 in the method for the production of a porous hollow fiber membrane as described hereinafter. As a result, the porous hollow fiber membrane of polypropylene exhibits relatively low pore properties as evinced by the inner surface porosity falling in the range of 10 to 30%, preferably 12 to 20%, the void ratio in the range of 10 to 60%, preferably 30 to 55%, and the specific surface area in the range of 10 to 40 m$^2$/g, preferably 25 to 30 m$^2$/g and yet exhibits high gas-exchange ability as evinced by the oxygen gas flux falling in the range of 100 to 1,500 liters/min.m$^2$.kg/cm$^2$, preferably 300 to 1,000 liters/min.m$^2$.kg/cm$^2$, the oxygen permeation coefficient in the range of 140 to 2,000 liters/min.m$^2$.kg/cm$^2$, preferably 400 to 1,400 liters/min.m$^2$.kg/cm$^2$, and the ultimate amount of oxygen permeated in the range of 200 to 2,600 liters/min.m$^2$, preferably 600 to 1,500 liters/min.m$^2$.

These desirable properties are ascribable to the following structure which the porous hollow fiber membrane of polypropylene of this invention is allowed to acquire by controlling the crystallinity of polypropylene in the range of 85 to 94% and the double refractive index ($\Delta$n) in the range of 0.001 to 0.01, namely by adjusting the crystallinity of polypropylene to a slightly low level and repressing the orientation of crystals.

Specifically, on the inner surface 2 side, the solid phase comprises polypropylene particles closely bound as partially exposed, namely fused and then cooled and solidified to form a continuous phase. In the interior of the membrane, the solid phase comprises a multiplicity of polypropylene particles which are irregularly gathered without any directionality in the circumferential direction and are arranged side by side to form polypropylene clusters in the axial direction of fiber. These polypropylene clusters are interconnected with polypropylene fibrils. Inside the membrane, therefore, the solid phase is thought to be formed by the aggregation of a multiplicity of polypropylene clusters each having polypropylene particles arranged side by side in the axial direction of fiber. On the outer surface 3 side, the solid phase comprises, though subject to variation with the kind of the cooling and solidifying liquid to be used, of polypropylene fibrils containing polypropylene particles and bound coarsely in a reticular form or, similarly to the solid phase in the interior of the membrane, comprises the aggregation of a multiplicity of polypropylene clusters each having polypropylene particles arranged side by side in the axial direction of fiber. The gaps between the component segments of the solid phase constitute themselves a three-dimensional network of continuous holes extended in the wall thickness part 3 of the hollow fiber membrane 1 inclusive of the inner surface 2 and the outer surface 3 after the pattern of long channels running from the inner surface 2 through the outer surface 3, with the individual holes interconnected not straightly but reticularly in an intricate pattern.

In the porous hollow fiber membrane of polypropylene of this invention, the sizes and the degrees of distribution of the polypropylene particles forming the hollow fiber membrane and the gaps between the component segments of the solid phase of such polypropylene particles can be controlled in respectively preferable magnitudes by the conditions for production of the hollow fiber membrane and the composition of raw materials. The average diameter of the polypropylene particles is preferable to be in the range of 0.1 to 1.0 μm, preferably 0.3 to 0.5 μm, the average void diameter in the inner surface 2 in the range of 0.1 to 1.0 μm, preferably 0.3 to 0.6 μm, and the maximum value of the pore diameter distribution curve of the whole membrane in the range of 0.02 to 0.2 μm. Further, in the porous hollow fiber membrane of polypropylene of this invention, for the purpose of preventing the membrane used as in the oxygenator from entailing leakage of blood plasma or enabling the membrane used as in a varying filtration device to manifest high efficiency in exchange of gas and in permeation of gas without arousing the phenomenon of clogging, the ratio of the oxygen flux to the inner surface porosity is desired to fall in the range of 7 : 1 to 30 : 1, the ratio of the oxygen flux to the void ratio in the range of 1 : 1 to 13 : 1, and the quotient of the oxygen flux divided by the porisity at or below 0.7.

The hollow fiber membrane answering this description is produced as follows, for example. As illustrated in Fig. 2, a composition 11 comprises polypropylene, an organic filler, and a crystal seed-forming agent is fed through a hopper 12 to a kneader such as, for example, a single-screw extruder 13, there to be melted, kneaded, and extruded. The extruded composition is forwarded to a spinning device 14 and discharged therein through an annular spinning nozzle (not shown) of a spinneret 15 into a gaseous atmosphere such as, for example, the ambient air. The hollow fiber 16 emanating from the spinning nozzle is introduced into a cooling tank 18 containing a cooling and solidifying liquid 17 and cooled and solidified by contact with the cooling and solidifying liquid 17. In this case, the contact between the hollow fiber 16 and the cooling and solidifying liquid 17 is preferable to be effected, as illustrated in Fig. 2, by allowing the cooling and solidifying liquid 17 to flow down the interior of a cooling and solidifying liquid conduit 19 laid through the bottom of the cooling tank 18 and extended downwardly and causing the hollow fiber 16 to run into parallel-flow contact. The cooling and solidifying liquid 17 which has flowed down is received and stored in a solidifying tank 20. In the liquid kept in the tank 20, the hollow fiber 16 is introduced and caused to change the direction of travel by a deflection bar 21 so as to be solidified through thorough contact with the cooling and solidifying liquid 17. The cooling and solidifying liquid 16 which has accumulated in the tank is discharged through a circulation line 23 and circulated by a circulation pump 24 to the cooling tank 18 mentioned above. Then, the solidified hollow fiber 16 is led to an extraction tank 27 containing therein a liquid extractant capable of dissolving the organic filler and incapable of dissolving polypropylene. When the liquid extractant 25 happens to be something like a halogenated hydrocarbon which is highly volatile and incompatible with water as described hereinafter, this liquid extractant 25 may be capped with an upper layer 26 of water, for example, for protection against evaporation. The hollow fiber led out of the extraction tank 27 by a drive roll 22 is reextracted when necessary, passed through such steps as drying and heat treatment, and taken up into a roll.

The species of polypropylene which are usable as the raw material in the present invention include not only propylene homopolymers but also block polymers having propylene as a main component and additionally containing other monomers, for example. The polypropylene is preferable to possess a melt index (M.I.) in the range of 5 to 70, preferably 10 to 40. Among other polypropylene species mentioned above, the propylene homopolymers prove particularly preferable. The most preferable of such propylene homopolymers are those having high degrees.

The organic filler is required to be uniformly dispersible in the propylene polypropylene mentioned above while the polypropylene is in a molten form and readily soluble in the liquid extractant as described hereinafter. The fillers which meet the requirement include liquid paraffins (number average molecular weight in the range of 100 to 2,000), α-olefin oligomers [such as, for example, ethylene oligomer (number average molecular weight in the range of 100 to 2,000), propylene oligomer (number average molecular weight in the range of 100 to 2,000, and ethylene-propylene oligomer (number average molecular weight in the range of 100 to 1,000)], paraffin waxes (number average molecular weight in the range of 200 to 2,500), and various hydrocarbons. Among other fillers mentioned above, the liquid paraffins prove particularly preferable.

The mixing ratio of the polypropylene to the organic filler is preferable to be such that the amount of the organic filler is in the range of 50 to 170 parts by weight, preferably 80 to 150 parts by weight, based on 100 parts by weight of the polypropylene. If the amount of the organic filler is less than 50 parts by weight, part of the produced hollow fiber membrane is formed of a continuous phase of polypropylene and is incapable of exhibiting an ability to permeate gas. Conversely if this amount exceeds 170 parts by weight, the produced hollow fiber membrane exhibits an unduly low viscosity and betrays poor formability in the shape of a hollow fiber. The composition as the raw material is prepared (designed) by melting and kneading the mixture of the prescribed composition and extruding the resultant blend by the use of an extruder such as a twin-screw extruder, and subsequently pelletizing the extruded mixture. The crystal seed-forming agent to be incorporated in the raw material according with this invention is an organic heat-resistant substance having a melting point of not lower than 150°C (preferably in the range of 200° to 250°C) and a gelling point of not lower than the crystallization starting temperature of the polyolefin to be used. The incorporation of the crystal seed-forming agent is aimed at contracting the polypropylene particles thereby narrowing the gaps or continuous holes between the separate segments of the solid phase of polypropylene particles, and heightening the pore density. The crystal seed-forming agents which are usable herein include 1.3, 2.4-dibenzylidene sorbitol, 1.3, 2.4-bis(p-methylbenzylidene) sorbitol, 1.3, 2.4-bis(p-ethylbenzylidene) sorbitol, bis(4-t-butylphenyl) sodium phosphate, sodium benzoate, adipic acid, talc, and kaolin, for example.

Among the crystal seed-forming agents mentioned above, benzylidene sorbitols, particularly 1.3, 2.4-bis(p-ethylbenzylidene)sorbitol and 1.3, 2.4-bis(p-methylbenzylidene) sorbitol, prove preferable in respect that they leak into blood only sparingly. The amount of the crystal seed-forming agent to be incorporated in the polypropylene is in the range of 0.1 to 5 parts by weight, preferably 0.2 to 1.0 part by weight, based on 100 parts by weight of polypropylene.

The composition, i.e. the raw material, prepared as described above is melted and kneaded with an extruder such as a single-screw extruder, at a temperature in the range of 160° to 250°C, preferably 180° to 220°C, for example, discharged through an annular nozzle of a spinning device into a gaseous atmosphere, when necessary with the aid of a gear pump, to form a hollow fiber. To the central part of the interior of the annular nozzle, a gas such as nitrogen gas, carbon dioxide gas, helium, argon, or air may be spontaneously aspirated or, when necessary, forcibly introduced. The hollow fiber discharged through the annular nozzle is subsequently allowed to fall down and brought into contact with the cooling and solidifying liquid in the cooling tank. The distance of this fall of the hollow fiber is preferable to be in the range of 5 to 1,000 mm, particularly 10 to 500 mm. If the distance of the fall is less than 5 mm, there arises the possibility of the hollow fiber pulsating and collapsing on entering the cooling and solidifying liquid. Inside the cooling tank, the hollow fiber has not yet been fully solidified and is liable to be deformed by the external force because it contains a gas in the central cavity thereof.

The forcible movement of the hollow fiber can be attained and, at the same time, the deformation of the hollow fiber under the external force (such as, for example, fluid pressure) can be precluded by allowing the cooling and solidifying liquid 17 to flow down the interior of the cooling and solidifying liquid conduit 19 laid through the bottom of the cooling tank 18 and extended downwardly and causing the hollow fiber to come into parallel-flow contact with the flow of the solidifying liquid as illustrated in Fig. 2. For the flow of the cooling and solidifying liquid in this case, the speed of spontaneous fall is sufficient. The cooling temperature in this case is in the range of 10° to 90°C, preferably 20° to 75°C. If this temperature is lower than 10°C, the cooling and solidifying speed is unduly high and the greater part of the wall thickness part forms a dense layer and, as the result, the produced porous hollow fiber membrane of polypropylene is deficient in the ability to exchange gas. Conversely, if this temperature exceeds 90°C, the hollow fiber is not fully cooled and solidified and has the possibility of sustaining breakage in the cooling and solidifying tank.

As disclosed in Japanese Patent Laid-Open SHO 62(1987)-006,770, a compound identical or similar to the organic filler mentioned above may be used as the cooling and solidifying liquid. Preferably, for the purpose of promoting the crystallization of polypropylene in the outer surface of the formed hollow fiber membrane without impairing the proper polypropylene content in the composition, allowing the outer surface and the interior of the hollow fiber membrane to be formed of the aggregation of a multiplicity of polypropylene clusters each having polypropylene particles arranged side by side in the axial direction of fiber, and enabling the hollow fiber membrane to acquire a smooth surface, the cooling and solidifying liquid is preferable to be a liquid which exhibits no compatibility with either the polypropylene or the organic filler and possessing a specific heat capacity in the range of 0.20 to 0.80 cal/g, preferably 0.25 to 0.70 cal/g and a dynamic viscosity at 40°C in the range of 6.0 to 60 cSt, preferably 10 to 50 cSt. The liquids which exhibit no compatibility with either the polypropylene or the organic filler and possessing a specific heat capacity in the range of 0.20 to 0.80 cal/g and a dynamic viscosity at 40°C in the range of 6.0 to 60 cSt include silicone oils such as dimethyl silicone oil and methylphenyl silicone oil and polyethylene glycols possessing average molecular weights approximately in the range of 100 to 400, for example. The hollow fiber which has been fully cooled and solidified in the cooling and solidifying is forwarded via the deflection bar as to the extraction tank, there to effect solution and extraction of the organic filler. The method for effecting the solution and extraction of the organic filler is not limited to that which resorts to the extraction tank illustrated in Fig. 2. Any method can be employed on the sole condition that it should be capable of establishing necessary contact between the hollow fiber and the liquid extractant. Examples are the shower method which comprises showering the hollow fiber on the belt conveyor with the liquid extractant and the rewinding method which comprises immersing in the liquid extractant the skein on which the hollow fiber has been rewound from a separate roll. Optionally, two or more such methods may be adopted in combination.

The liquid extractant has no particular restriction except for the sole requirement that it should be incapable of dissolving the polypropylene forming the hollow fiber membrane and capable of dissolving and extracting the organic filler. The liquid extractants which are usable herein include alcohols such as butanols, pentanols, hexanols, octanols, and lauryl alcohol and halogenated hydrocarbons such as 1,1,2-trichloro-1,2,2-trifluoroethane, trichlorofluoromethane, dichlorofluoromethane, 1,1,2,2-tetrachloro-1,2-difluoroethane, for example. Among the liquid extractants mentioned above, halogenated hydrocarbons prove preferable from the viewpoint of the ability to extract the organic filler and chlorofluorinated hydrocarbons prove particularly preferable from the standpoint of the safety for the human body.

In the method for the production of the porous hollow fiber membrane of polypropylene according to the present invention, the spinning draft during the course of spinning is set in the range of 100 to 300, preferably 150 to 250. By thus limiting the spinning draft to the specific range of 100 to 300, the produced hollow fiber membrane is allowed to assume a slightly low crystallinity and a repressed crystal orientation as evinced by the crystallinity falling in the range of 85 to 94% and the double refractive index ($\Delta n$) in the range of 0.001 to 0.01. As the result, there is formed a three-dimentional network of pores extending throughout not only the direction of membrane thickness but also the axial direction of fiber and consequently imparting a high ability of gas exchange or high permeation property to the membrane.

If the spinning draft is less than 100, the produced hollow fiber membrane exhibits unduly low crystallinity and crystal orientation and possesses insufficient strength and possibly suffers from poor secondary workability. Conversely, if the spinning draft exceeds 300, the crystallinity and the crystal orientation are so high that virtually no pore is formed or, if pores are formed at all, they are extended only in the direction of membrane thickness and possibly fails to acquire any sufficient capacity for gas permeation of material transfer.

The hollow fiber membrane obtained as described above, when necessary, is further subjected to a heat-treatment. The heat-treatment is carried out in a gaseous atmosphere of air, nitrogen, or carbon dioxide gas at a temperature in the range of 50° to 160°C, preferably 70° to 120°C, for a period in the range of 5 seconds to 120 minutes, preferably 10 seconds to 60 minutes. By this heat-treatment, the hollow fiber membrane is structurally stabilized to acquire enhanced dimensional stability. In this case, the hollow fiber membrane may be stretched prior to or during the heat-treatment.

The porous hollow fiber membrane obtained as described above is used advantageously for various applications as in gas-exchange devices represented by the oxygenator, body fluid treating devices, and waste water treating devices. Since the porous hollow fiber membrane of polypropylene of this invention is enabled to acquire a three-dimensional network of holes, exhibit a high ability of gas exchange and, in the meantime, possess relatively low pore properties, and enjoy freedom from leakage of blood plasma by keeping the crystallinity of polypropylene at a relatively low level and repressing the crystal orientation as described above, it can be used optimally for the oxygenator.

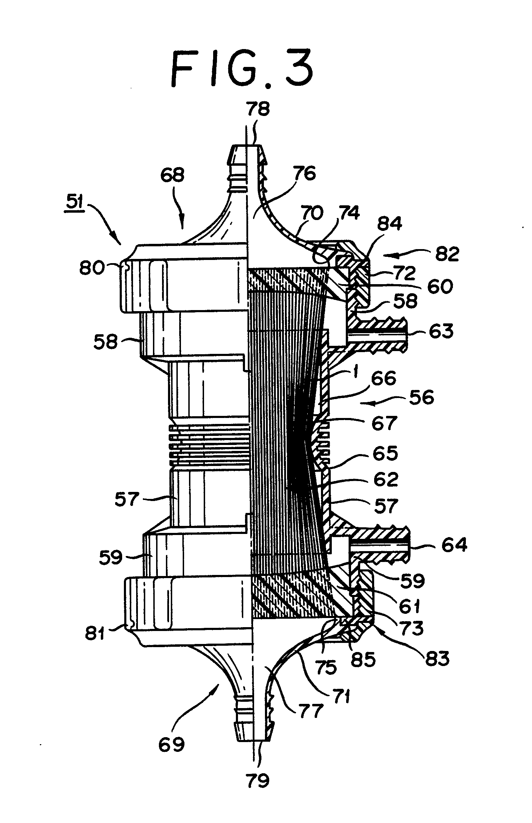

Fig. 3 illustrates in an assembled form a typical hollow fiber membrane type oxygenator as one embodiment of this invention. The hollow fiber membrane type oxygenator 51 is furnished with a housing 56. This housing 56 comprises a cylindrical main body 57 and mounting covers 58, 59 each fitted with an annular male fiber and respectively attached to the opposite terminal parts of the cylindrical main body 57. Inside the housing 56, a multiplicity in the range of 10,000 to 70,000, for example, of lengths of the hollow fiber membrane 1 obtained as described above are parallelly disposed as mutually separated along the direction of length of the housing 56. Inside the mounting covers 58, 59, the opposite terminal parts of the hollow fiber membrane 1 are watertightly supported with bulkheads 60, 61, with the openings of the individual lengths of the hollow fiber membrane kept unoccluded. The bulkheads 60, 61, in conjunction with the outer periphery of the hollow fiber membrane 1 and the inner surface of the housing 56 define and tightly enclose a blood chamber 62 as a first material transfer fluid chamber and, at the same time, serve to separate the blood chamber 62 from an oxygen-containing gas passing space (not shown) to be formed inside the hollow fiber member 1 as a second material transfer fluid space.

One of the mounting covers, 58, is provided with an inlet 63 for supply of blood as the first material transfer fluid. The other mounting cover 59 is provided with an outlet 64 for discharge of the blood.

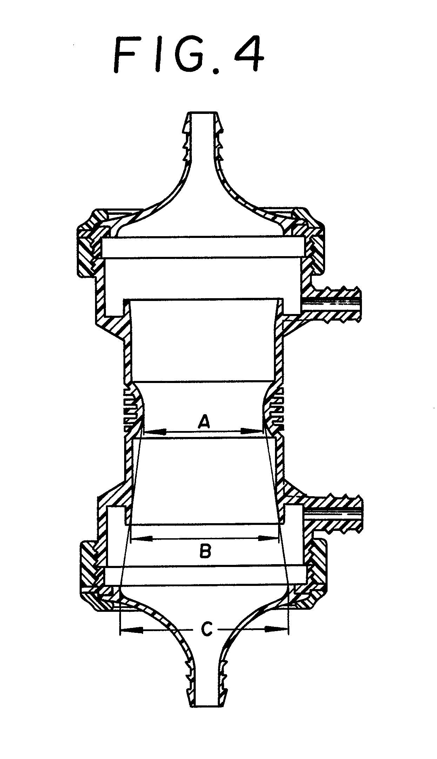

The housing 56 is preferable to be provided on the inner surface of the cylindrical main body 56 thereof with a constricting part 65 disposed at the center in the axial direction and projected inwardly. To be specific, this constricting part 65 is integrally formed with the cylindrical main body 57 on the inner surface thereof and adapted to constrict the overall periphery of the hollow fiber bundle 66 comprising the multiplicity of lengths of the hollow fiber membrane 1 inserted inside the cylindrical main body 57. Thus, the hollow fiber bundle 66 is constricted at the center in the axial direction to form a constricted part 67 as illustrated in Fig. 3. The filling ratio of the hollow fiber membrane 1 is varied in various parts along the axial direction and is maximized in the central part. For the reason to be described hereinafter, the preferable filling ratios in the various parts are as follows. As illustrated in Fig. 4, the filling ratio A in the constricted part 67 at the center is approximately in the range of 60 to 80%, the filling ratio B within the rest of the cylindrical main body 57 approximately in the range of 30 to 60%, and the filling ratio C in the opposite terminal parts of the hollow fiber bundle 66 or on the outer surface of the bulkheads 60, 61 approximately in the range of 20 to 50%. Now, the formation of the bulkheads 60, 61 will be described below. As already mentioned, the bulkheads 60, 61 fulfil an important role of isolating the interior of the hollow fiber membrane 1 from the exterior thereof. Generally, the bulkheads 60, 61 are produced by causing a macromolecular potting material of high polarity such as, for example, polyurethane, silicone, or epoxy resin to be cast by the centrifugal injection method on the opposite terminal inner wall surfaces of the housing 56 and allowing the potting material thus cast to cure. To be more specifically, a multiplicity of lengths of the hollow fiber membrane 1 greater than the length of the housing 56 are prepared and, with the opposite opening ends thereof stoppered tightly with resin of high viscosity, are disposed in place as arranged inside the cylindrical main body 57 of the housing 56. Then, with the opposite terminal parts of the hollow fiber membrane 1 perfectly covered with pattern covers greater in diameter than the mounting covers 58, 59, the housing 56 is kept in rotation about the axis thereof and the macromolecular potting material is introduced into the housing through the opposite terminal part sides. After the resin has been cast in place and then cured, the pattern covers are removed and the outer surface parts of the cured resin discs are cut with a sharp blade to expose the opposite open ends of the hollow fiber membrane 1. As the result, the bulkheads 60, 61 are formed.

The outer surfaces of the bulkheads 60, 61 are respectively covered with flow path-forming members 68, 69 each provided with an annular protuberance. The flow path-forming members 68, 69 are respectively composed of liquid distribution members 70, 71 and fiber rings 72, 73. An inlet chamber 76 and an outlet chamber 77 for the oxygen-containing gas as the second material transfer fluid are formed by causing the end faces of raised ridges 74, 75 formed as annular protuberances near the peripheral edge parts of the liquid distribution members 70, 71 to collide against the bulkheads 60, 61 and helically fixing the fiber rings 72, 73 on the mounting covers 58, 59 respectively. In the flow path-forming members 68, 69, an inlet 78 and an outlet 79 for the oxygen-containing gas as the second material transfer fluid are respectively fomred.

The empty spaces formed in the peripheral edge parts of the bulkheads 60, 61 by the bulkheads 60, 61 and the flow path-forming members 68, 69 are filled with fillers 84, 85 to be introduced therein through at least one of two holes 82, 83 communicating with the empty spaces, to seal the bulkheads 60, 61 contiguously therewith. Otherwise, the sealing may be attained by the use of O-rings (not shown).

The hollow fiber membrane type oxygenator of the present embodiment is of the type using blood as the first material transfer fluid and an oxygen-containing gas like the air as the second material transfer fluid, namely of the type for effecting exchange of gas by blowing the oxygen-containing gas inside the hollow fiber membrane and circulating the blood outside the hollow fiber membrane. The hollow fiber membrane type oxygenator according to the present invention may be adapted to effect this exchange of gas by circulating the blood inside the hollow fiber membrane. In this case, in the oxygenator of the same structure as that of the present embodiment, the oxygen-containing gas may be used as the first material transfer fluid and the blood as the second material transfer fluid.

Now, the present invention will be described more specifically below with reference to working examples.

Example 1

In a twin-screw extruder (produced by Ikegai Iron Works, Ltd. and marketed under product code of "PCM-30-25"), 100 parts by weight of propylene homopolymer possessing a melt index (M.I.) of 23, 120 parts by weight of liquid paraffin (number average molecular weight 324), and 0.5 part by weight of 1.3, 2.4-bis(p-ethylbenzylidene) sorbitol as a crystal seed-forming agent were melted and kneaded and then extruded. The extruded mixture was pelletized. The pellets were melted at a temperature of 200°C by the use of an apparatus illustrated in Fig. 2, namely a single-screw extruder (produced by Kasamatsu Seisakusho and marketed under product code of "WO-30"). Through an annular spinning nozzle 15 possessing a core diameter of 4 mm, an inside diameter of 6 mm, an outside diameter of 7 mm, and a land length of 15 mm, the molten mixture was discharged into the ambient air at a rate of 2.66 g/min and the hollow fiber emanating from the spinning nozzle was allowed to fall. The distance of this fall was 18 mm. The hollow fiber 16 was subsequently brought into contact with the cooling and solidifying liquid 17 held in the cooling tank 18 and then cooled by being brought into parallel-flow contact with the part of the cooling and solidifying liquid 17 flowing down spontaneously inside the cooling and solidifying liquid conduit 19. At this time, the temperature of the cooling and solidifying liquid was 30°C. Then, the hollow fiber 16 was introduced into the cooling and solidifying liquid held in the solidifying tank 27, caused to change the direction of travel by the deflection bar 21, introduced into 1,1,2-trichloro-1,2,2-trifluoroethane (hereinafter referred to as "Freon 113") held in the extraction tank 27, again caused to change the direction of travel by the deflection bar 21, led to the drive roll 22 being wound at a rate of 80 m/min, conveyed on the beld conveyor 28 and continuously washed in the shower conveyor type extruder 29 with Freon 113 for through extraction of the liquid paraffin. During the spinning step operated as described above, the spinning draft was set at 208. The hollow fiber membrane 16 obtained by the spinning operation described above was passed round the drive roll 22, forwarded through a heat-treating device 32 with heat-means 30 and drive rolls 31 at a temperature in the range of 100° to 120°C over a period of 19 seconds, and taken up on a bobbin 34 with a winder 33. The hollow fiber taken up on the bobbin 34 was rewound on a skein by a rewinding device, to obtain a hollow fiber bundle about 30 cm in diameter. The hollow fiber membrane thus obtained was examined as to shape (wall thickness), average diameter of polypropylene particles, average pore diameter in inner surface, void ratio, pore diameter distribution curve, porosity in inner surface, oxygen gas flux, capacity for oxygen gas addition, capacity for removal of carbon dioxide gas, ultimate amount of oxygen permeated, specific surface area, leakage of blood plasma, crystallinity, and double refractive index. The results were as shown in Table 1.

The hollow fiber membrane was tested for the phenomenon of capillarity through voids therein. The hollow fiber membrane, with one terminal part thereof completely closed by being melted with fire, was vertically immersed to a depth of about 2 mm in a petri dish filled to a height of about 2 mm with a solution of ink in ethanol, and left standing therein substantially upright for 5 minutes. After the standing, the hollow fiber was vertically pulled up and the distance of ascent of the ink solution through the voids in the membrane by virtue of capillarity was measured. The results were as shown in Table 1. The numerical value of the distance is the average of values obtained of a total of 10 lengths of the hollow fiber membrane.

Control 1

For comparison, a commercially available oxygenator quality hollow fiber membrane of polypropylene produced by the stretching method was tested, similarly to Example 1, for shape (inside diameter/wall thickness), void ratio, pore diameter distribution curve, porosity in inner surface, oxygen gas flux, capacity for oxygen gas addition, capacity for removal of carbon dioxide gas, oxygen permeation coefficient, ultimate amount of oxygen permeated, specific surface area, leakage of blood plasma, crystallinity, double refractive index, and phenomenon of capillarity in voids. The results were as shown in Table 1. The hollow fiber membrane produced by the stretching method was presumed to be spun at a spinning draft approximately in the range of 200 to 500.

Control 2

A hollow fiber membrane was produced by following the procedure of Example 1, except that the spinning draft during the course of spinning was fixed at 500. This hollow fiber membrane was tested, similarly to Example 1, for shape (inside diameter/wall thickness), void ratio, pore diameter distribution curve, porosity in inner surface, oxygen gas flux, capacity for oxygen gas addition, capacity for removal of carbon dioxide gas, oxygen permeation coefficient, ultimate amount of oxygen permeated, specific surface area, leakage of blood plasma, crystallinity, double refractive index, and phenomenon of capillarity in voids. The results were as shown in Table 1.

The terms of various properties mentioned in the working example and the controls are defined and as follows.

Shape (inside diameter/wall thickness)

From the plurality of lengths of a given hollow fiber, ten lengths were randoly selected as a sample and cut crosswise into rings about 0.5 mm in thickness. The cross sections of these rings were projected on a given surface with a universal projector (produced by Nippon Kogaku K.K. and marketed under trademark designation of "Nikon Profile Projector V-12") to measure their outside diameters $d_1$ amd inside diameters $d_2$. The wall thickness t was calculated as $t = d_1 - d_2$. This property was reported as the average of the numerical values thus found for the ten samples.

Average diameter of polypropylene particles

This property was determined by thoroughly cooling a given hollow fiber with liquefied nitrogen, breaking the frozen hollow fiber into pieces with a sudden shock, photographing the exposed cross sections and longitudinal sections under a scanning electron microscope (made by JEOL and marketed under product code of "JSM-840") to obtain an electron micrograph (10,000 magnifications), randomly selecting 30 particles from the particles appearing in the electron micrograph, measuring the diameters of the 30 particles, and averaging the 30 diameters so found.

Average pore diameter in inner surface

This property was determined by photographing the inner surface of a given hollow fiber membrane in the same manner as described above, randomly selecting 30 particles from the particles appearing in the electron micrograph, measuring their diameters, and averaging the 30 diameters so found.

Pore diameter distribution curve/void ratio(%)

By a procedure which comprised securing a sample, about 2 g, of a given hollow fiber, cutting the sample crosswise into tubes not more than 5 mm in length with a sharp razor blade, setting the tubes in place in a mercury porosimeter (produced by Carlo Elva and marketed under product code of "65A Type") and subjecting them to a pressure gradually increased up to 1,000 kg/cm$^2$, the pore distribution curve was obtained by plotting the amounts of mercury forced into the tubes under varying magnitudes of pressure and the void ratio was found from the total volume of fine pores (volume of pores in the hollow fiber per unit weight).

9

Oxygen gas flux

This property was determined by producing a miniature module having an available length of 14 cm and a membrane surface of 0.025 m2 from a given hollow fiber, completely closing one of the opposite ends of the miniature module, exposing the interior of the hollow fiber to one atmosphere of oxygen pressure until the miniature module reached its steady state, and then finding the flow volume of the oxygen gas from the scale of a flow meter (produced by Kusano Rikagaku Kikai Seisakusho and marketed under trademark designation of "Float Meter").

Oxygen permeation coefficient/ultimate amount of oxygen permeated

Generally, the porous membrane is recognized to satisfy the relation, $1/Q = a + b1/P$, between the amount of gas permeated and the inter-membrane pressure difference P.

There exists one sort of value equivalent to the permeation coefficient, though not in the strict sense, and this value is represented as $1/b$. There also exists the value, $\lim 1/Q = a$, namely the ultimate amount of permeation

$\Delta p \rightarrow \infty$

Qmax, and this value is represented as $1/a$. The values, $1/b$ and $1/a$, therefore, were respectively determined by plotting $1/Q$ to $1/\Delta P$ under varying the pressure from 0.2 kg/cm2 to 1.0 kg/cm2 stepwise with an increment of 0.1 kg/cm2 and measuring the oxygen gas fluxes accordingly.

Specific surface area

This property was determined by cutting a given hollow fiber crosswise into tubes not more than about 5 mm in length with a sharp razor blade, washing the tubes with ethanol, vacuum drying the washed tubes, and subjecting the dried tubes to the measurement of the BET (Brunauer-Emmett-Teller) method using liquefied nitrogen. The adsorption of vapor to most adsorbents was found by the BET formula:

$$U = \frac{U_m c x}{(1 - x)(1 - x + cx)} \qquad (1)$$

[wherein u is the amount of vapor adsorbed, u is the amount of monomolecular layer of vapor adsorbed, c is a constant, and x is the saturated vapor pressure under the condition of P/Po, where P is the vapor pressure and Po is the temperature of adsorption]. Thus, the value of u for P was determined by the use of a vacuum line (3 points).

By transforming the BET formula, the following equation is derived.

$$\frac{x}{u(1-x)} = \frac{1}{u_m c} + \frac{c-1}{u_m c} x \qquad (2)$$

or

$$\frac{x}{u(1-x)} = \frac{1}{u_m c} + \frac{1}{u_m c} \cdot \frac{1}{x} \qquad (3)$$

The values, $u_m$ and c, therefore, were found by plotting

$$\frac{1}{u(1-x)} \qquad vs \; X \; or \qquad \frac{1}{u(1-x)}$$

vs 1/x adn performing a calculation, $1/u_m$ = (inclination of straight line) + (segment).

Since $u_m$ has as its physical significance the amount of monomolecular layer adsorbed, the surface area can be calculated from the cross-sectional area occupied by one molecule (15 Å2 for nitrogen, for example). (The error of the three-point measurement is about ± 1 m2/g.)

Inner surface porosity (%)

This property was determined by photographing the inner surface of a given hollow fiber under a scanning electron microscope (made by JEOL and marketed under product code of "JSM-840") to obtain an electron micrograph (10,000 magnifications) and analyzing a part, 3 cm square, of the electron micrograph as to density by the use of a graphic analyzer (made by Showa Denko K.K. and marketed under trademark designation of "Shonic GA").

Capacity for oxygen gas addition and capacity for removal of carbon dioxide

These properties were determined by producing an oxygenator module possessing an available length of 130 mm and a membrane surface of 1.6 m² from a given hollow fiber, passing bovine blood (standard venous blood) through the interior of hollow fiber in a single path at a flow volume of 1.6 liters/min, passing pure oxygen through the exterior of the hollow fiber at a flow volume of 1.6 liters/min, testing the bovine blood at the inlet and the outlet of the oxygenator for pH, partial pressure of carbon dioxide gas ($P_{co2}$), and partial pressure of oxygen gas ($P_{o2}$), by the use of a blood gas tester (produced by Radiometer Corp. and marketed under product code of "BGA3"), and calculating the partial pressure difference between the inlet and the outlet of the oxygenator.

Leakage of blood plasma

The leakage of blood plasma was determined by producing the same oxygenator module as used in the determination of the capacity for oxygen gas addition and the capacity for removal of carbon dioxide gas, incorporating the oxygenator module in the partial V-A bypass circuit in the cannulation interconnecting the carotid artery and the jugular vein of a mongrel dog (body weight about 20 kg), performing extracorporeal circulation of blood for 30 hours, and measuring the amount of blood plasma leaking from the interior of the hollow fiber. Even when, no leakage was detected, drops of steam condensate collecting outside the hollow fiber were tested for proteinaceous reaction in an effort to detect the slightest leakage of blood plasma.

Crystallinity

This property was determined by finding the specific gravity of a given hollow fiber membrane in accordance with the "method for determination of density and specific gravity to plastic" specified in Japanese Industrial Standard (JIS) K 7112, using n-butanol and carrying out the calculation of the following formula:

$$x \ (\%) \ = \ \frac{d_c}{d} \cdot \frac{d - d_a}{d_c - d_a} \ \times \ 100$$

wherein x is the crystallinity, d is density found by measurement, $d_c$ is perfect crsytal density, $d_4^{30} = 0.936$ (average value shown in Polymer Handbook), and $d_a$ is perfect amorphous density, $d_4^{30} = 0.850$ (average value shown in Polymer Handbook).

Double refractive index ($\Delta n$)

This property was determined by randomly selecting 10 lengths from a given lot of lengths of hollow fiber membrane, cutting the central parts, 3 cm in length, of these selected lengths, converting the cut parts into specimens by inserting a diagonal cut at one of the opposite ends of each of the cut parts, immersing the specimens in a soaking liquid (liquid paraffin), measuring retardation (R: nm) under a polarizing microscope (produced by Nippon Kogaku K.K. and marketed under trademark designation of "Optiphto-POL") by the use of a senalmon type compensator, calculating the average of the ten measurements consequently obtained, and computing the following formula using the retardation found above.

Double refractive index ($\Delta n$) = R/d
wherein R is the retardation (average) and d is thickness of specimen (nm)
(compensated with the void ratio). The double refractance of perfectly oriented polypropylene was 0.035 (found from literature).

EP 0 353 148 A2

Table 1

| | Example 1 | Control 1 | Control 2 |
|---|---|---|---|
| Spinning draft | 208 | 200~500 | 500 |
| Shape (inside diameter/membrane thickness) ($\mu$m) | 201/44 | 200/23 | 200/45 |
| Average diameter of polypropylene particles ($\mu$m) | 0.39 | - | 0.4 |
| Average pore diameter in inner surface ($\mu$m) | 0.55 | - | - |
| Positionof maximum value of pore diameter distribution curve ($\mu$m) | 0.17 | 0.17 | - |
| Oxygen permeation coefficient (liter/min.m$^2$.kg/cm$^2$) | 772 | 1605 | - |
| Ultimate amount of oxygen permeated (liter/min.m$^2$.kg/cm$^2$) | 954 | 3240 | - |
| Specific surface area (m$^2$/g) | 28 | 48 | 7 |
| Porosity (%) [a] | 18.3 | 20.1 | 5.3 |
| Void ratio )%) [b] | 45.1 | 45.0 | 10.5 |
| Oxygen gas flux [c] (liter/min.m$^2$.kg/cm$^2$) | 456.7 | 1200 | almost no gas flux |
| c/a | 25.0 | 59.7 | - |
| c/b | 10.1 | 26.6 | - |
| c/a x b | 0.55 | 1.33 | - |
| Capacity for oxygen gas addition (ml/min.m$^2$) | 42.0 | 41.8 | - |
| Capacity for removal of carbon dioxide gas (ml/min.m$^2$) | 50.1 | 49.8 | - |
| Leakage of blood plasma | no occurence after 30 hrs | occurence after 17 hrs large amount of occurence after 20 hrs | - |
| Crystallinity (%) | 93.6 | 95.8 | 96.2 |
| Double refractive index ($\Delta$n) | 0.003 | 0.014 | 0.010 |
| Distance of ascent of ink (mm) | 40 | <1.0 | <1.0 |

This invention, as described above, is directed to a porous hollow fiber membrane of polypropylene possessing a substantially circular cross section 150 to 300 $\mu$m in inside diameter and 10 to 150 $\mu$m in wall thickness, which hollow fiber membrane exhibits a crystallinity in the range of 85 to 94%, a double refractive index ($\Delta$n) in the range of 0.001 to 0.01, an inner surface porosity in the range of 10 to 30%, a void ratio in the range of 10 to 60%, a specific surface area in the range of 10 to 40 m$^2$/g, an oxygen gas flux in the range of 100 to 1,500 liters/min.m$^2$.kg/cm$^2$, and an ultimate amount of oxygen permeated in the range of 200 to 2,600 liters/min.m$^2$. This porous hollow fiber membrane of polypropylene, therefore, manifests a high capacity for exchange of gas and a high capacity for permeation in a protracted use without entailing any impairment of performance due to leakage of blood plasma or clogging of membrane. It can be advantageously used, accordingly, as in gas-exchange devices represented by the oxygenator, body fluid treating devices, and waste water treating devices, for example. These characteristic properties are manifested to better advantage when the porous hollow fiber membrane of polypropylene is such that the solid phase in the inner surface of the hollow fiber membrane comprises polypropylene particles closely coalesced as partly exposed to form a continuous phase, the solid phase in the interior and the outer surface of the hollow fiber membrane comprises polypropylene particles arranged side by side in the axial direction of fiber to form a multiplicity of polypropylene clusters, the gaps between the separate segments of the solid phases constitute themselves holes continuing in the pattern of a three-dimensional network, the polypropylene particles of the solid phase possess an average particle diameter in the range of 0.1 to 1.0 $\mu$m, the voids in the inner surface of the hollow fiber membrane possess an average diameter in the range of 0.1 to 1.0 $\mu$m, and the maximum value of the pore diameter distribution curve for the whole membrane is in the range of 0.02 to 0.2 $\mu$m, the ratio of the oxygen flux to the inner surface porosity is in the range of 7 : 1 to 30 : 1, the ratio of the oxygen flux to the inner surface porosity is in the range of 2 : 1 to 13 : 1, and the quotient of the oyxgen flux divided by the porosity and the void ratio is not more than 0.7.

This invention is further directed to a method for the production of a porous hollow fiber membrane of polypropylene by the steps of mixing polypropylene, an organic filler uniformly dispersible in polypropylene

12

while the polypropylene is in a molten state and easily soluble in a liquid extractant to be used subsequently, and a crystal seed-forming agent, melting the resultant mixture and discharging the molten mixture in a hollow form through an annular spinning hole, cooling and solidifying the hollow fiber consequently obtained by to a cooling and solidifying liquid, and subsequently causing the cooled and solidified hollow fiber to contact the liquid extractant incapable of dissolving polypropylene thereby extracting the organic filler from the hollow fiber, which method is characterized by the fact that the draft ratio of spinning is in the range of 100 to 300. The crystallinity and orientation of polypropylene in the produced hollow fiber membrane, therefore, can be controlled in the specific ranges mentioned above. Owing to this control, a porous hollow fiber membrane possessing a three-dimensional network of continuous pores and consequently manifesting the desired properties mentioned above can be easily and stably produced. Further, when the cooling and solidifying liquid to be used in the method for the production of porous hollow fiber membrane of polypropylene according to this invention is a liquid possessing a specific heat capacity in the range of 0.20 to 0.80 cal/g and a dynamic viscosity at 40°C in the range of 6.0 to 60 cSt and lacking compatibility with either polypropylene or with the organic filler, the produced porous hollow fiber membrane of polypropylne excels not only in the material transfer property but also in the surface behavior.

This invention is also directed to an oxygenator provided with a hollow fiber membrane as a gas-exchange membrane, which oxygenator is characterized by the fact that the gas-exchagne membrane is a porous hollow fiber membrane of polypropylene possesses a substantially circular cross section 150 to 300 $\mu m$ in inside diameter and 10 to 150 $\mu m$ in wall thickness and the hollow fiber membrane exhibits a crsytallinity in the range of 85 to 94%, a double refractive index ($\Delta n$) in the range of 0.001 to 0.01, an inner surface porosity in the range of 10 to 30%, a void ratio in the range of 10 to 60%, a specific surface area in the range of 10 to 40 $m^2/g$, an oxygen gas flux in the range of 100 to 1,500 liters/min.$m^2$.kg/$cm^2$, and an ultimate amount of oxygen permeated in the range of 200 to 2,600 liters/min.$m^2$. This oxygenator, therefore, can be used for a protracted extracorporeal circulation of blood without experiencing any deterioration of the capacity for oxygen addition or the capacity for removal of carbon dioxide gas, inducing any leakage of blood or blood plasma, or inflicting any damage to the blood components or suffering from heavy pressure loss and deserves to be called a literally outstanding oxygenator. Moreover, the porous hollow fiber membrane of polypropylene to be used as a membrane for gas exchange exhibits the performance of oxygenator to still better advantage when it is such that the solid phase in the inner surface of the hollow fiber membrane comprises polypropylene particles closely coalesced as partly exposed to form a continuous phase, the solid phase in the interior and the outer surface of the hollow fiber membrane comprises polypropylene particles arranged side by side in the axial direction of fiber to form a multiplicity of polypropylene clusters, the gaps between the separate segments of the solid phases constitute themselves holes continuing in the pattern of a three-dimensional network, the polypropylene particles of the solid phase posess an average particle diameter in the range of 0.1 to 1.0 $\mu m$, the voids in the inner surface of the hollow fiber membrane possess an average diameter in the range of 0.1 to 1.0 $\mu m$, and the maximum value of the pore diameter distribution curve for the whole membrane is in the range of 0.02 to 0.2 $\mu m$, the ratio of the oxygen flux to the inner surface porosity is in the range of 7 : 1 to 30 : 1, the ratio of the oxygen flux to the inner surface porosity is in the range of 2 : 1 to 13 : 1, and the quotient of the oxygen flux divided by the porosity and the void ratio is not more than 0.7.

## Claims

1. A porous hollow fiber membrane of polypropylene possessing a substantially circular cross section 150 to 300 $\mu m$ in inside diameter and 10 to 150 $\mu m$ in wall thickness, which hollow fiber membrane exhibits a crystallinity in the range of 85 to 94%, a double refractive index ($\Delta n$) in the range of 0.001 to 0.01, an inner surface porosity in the range of 10 to 30%, a void ratio in the range of 10 to 60%, a specific surface area in the range of 10 to 40 $m^2/g$, an oxygen gas flux in the range of 100 to 1,500 liters/min.$m^2$.kg/$cm^2$, and an ultimate amount of oxygen permeated in the range of 200 to 2,600 liters/min.$m^2$.

2. A porous hollow fiber membrane of polypropylene according to claim 1, wherein the solid phase in the inner surface of the hollow fiber membrane comprises polypropylene particles closely coalesced as partly exposed to form a continuous phase, the solid phase in the interior and the outer surface of the hollow fiber membrane comprises polypropylene particles arranged side by side in the axial direction of fiber to form a multiplicity of polypropylene clusters, the gaps between the separate segments of the solid phases constitute themselves holes continuing in the pattern of a three-dimensional network, the polypropylene particles of the solid phase possess an average particle diameter in the range of 0.1 to 1.0 $\mu m$, the voids in the inner surface of the hollow fiber membrane possess an average diameter in the range of 0.1 to 1.0 $\mu m$, and the maximum value of the pore diameter distribution curve for the whole membrane is in teh range of 0.02 to 0.2 $\mu m$.

3. A porous hollow fiber membrane of polypropylene according to claim 1, wherein the ratio of said oxygen flux to said inner surface porosity is in the range of 7 : 1 to 30 : 1.

4. A porous hollow fiber membrane of polypropylene according to claim 1, wherein the ratio of said oxygen flux to said void ratio is in the range of 2 : 1 to 13 : 1.

5. A porous hollow fiber membrane of polypropylene according to claim 1, wherein the quotient of said oxygen flux divided by said porosity and said void ratio is not more than 0.7

13

EP 0 353 148 A2

6. A method for the production of a porous hollow fiber membrane of polypropylene by the steps of mixing polypropylene, and organic filler uniformly dispersible in polypropylene while the polypropylene is in a molten state and easily soluble in a liquid extractant to be used subsequently, and a crystal seed-forming agent, melting the resultant mixture and discharging the molten mixture in a hollow form through an annular spinning hole, cooling and solidifying the hollow fiber consequently obtained by to a cooling and solidifying liquid, and subsequently causing the cooled and solidified hollow fiber to contact the liquid extractant incapable of dissolving polypropylene thereby extracting the organic filler from the hollow fiber, which method is characterized by the fact that the draft ratio of spinning is in the range of 100 to 300.

7. A method according to claim 6, wherein said polypropylene contains 0.1 to 5 parts by weight of a dibenzylidene sorbitol type crystal seed-forming agent possessing a melting point of not lower than 150°C and a gelling point of not lower than the crystallization starting point of polypropylene to be used.

8. A method according to claim 6, wherein said cooling and solidifying liquid is a liquid possessing a specific heat capacity in the range of 0.20 to 0.80 cal/g and a dynamic viscosity at 40°C in the range of 6.0 to 60 cSt and lacking compatibility to either polypropylene or said organic filler.

9. A porous hollow fiber membrane of polypropylene according to claim 1, which is used for an oxygenator.

10. An oxygenator provided with a hollow fiber membrane as a gas-exchange membrane, which oxygenator is characterized by the fact that the gas-exchange membrane is a porous hollow fiber membrane of polypropylene possesses a substantially circular cross section 150 to 300 μm in inside diameter and 10 to 150 μm in wall thickness and the holow fiber membrane exhibits a crystallinity in the range of 85 to 94%, a doulbe refractive index ($\Delta n$) in the range of 0.001 to 0.01, an inner surface porosity in the range of 10 to 30%, a void ratio in the range of 10 to 60%, a specific surface area in the range of 10 to 40 $m^2$/g, an oxygen gas flux in the range of 100 to 1,500 liters/min.$m^2$.kg/$cm^2$, and an ultimate amount of oxygen permeated in the range of 200 to 2,600 liters/min.$m^2$.

11. An oxygenator according to claim 10, wherein the porous hollow fiber membrane of polypropylene used as the gas-exchange membrane is such that the solid phase in the inner surface of the hollow fiber membrane comprises polypropylene particles closely coalesced as partly exposed to form a continuous phase, the solid phase in the interior and the outer surface of the hollow fiber membrane comprises polypropylene particles arranged side by side in the axial direction of fiber to form a multiplicity of polypropylene clusters, the gaps between the separate segments of the solid phases constitute themselves holes continuing in the pattern of a three-dimensional network, the polypropylene particles of the solid phase possess an average particle diameter in the range of 0.1 to 1.0 μm, the voids in the inner surface of the hollow fiber membrane possess an average diameter in the range of 0.1 to 1.0 μm, and the maximum value of the pore diameter distribution curve for the whole membrane is in the range of 0.02 to 0.2 μm

12. An oxygenator according to claim 10, wherein the ratio of said oxygen flux to said inner surface porosity in said porous hollow fiber membrane of polypropylene to be used as the membrane for gas exchange is in the range of 7 : 1 to 30 : 1.

13. An oxygenator according to claim 10, wherein the ratio of said oxygen flux to said void ratio in said porous hollow fiber membrane of polypropylene to be used as the membrane for gas exchagne is in the range of 1 : 1 to 13 : 1.

14. An oxygenator according to claim 10, wherein the quotient of said oxygen flux divided by said porosity and said void ratio in said porous hollow fiber membrane of polypropylene to be used as the membrane for gas exchange is not more than 0.7.

14

FIG.2

FIG.1

# FIG. 3

# FIG.4